# EUROPEAN PATENT SPECIFICATION

(11) **EP 3 126 766 B1**
(45) Date of publication and mention of the grant of the patent: **27.02.2019**
(21) Application number: 15772618.3
(22) Date of filing: 30.03.2015
(51) Int. Cl.: F26B 23/00, F26B 3/04, F26B 9/06, F26B 15/00, F26B 3/06, F26B 21/08, F26B 21/02

(54) **METHOD FOR DRYING ITEMS BY AIR, ENERGY- RECOVERY SYSTEM AND DRYING ARRANGEMENT**
VERFAHREN ZUM TROCKNEN VON OBJEKTEN MITTELS LUFT, ENERGIE-RÜCKGEWINNUNGSSYSTEM UND TROCKENVORRICHTUNG
PROCÉDÉ DE SÉCHAGE D'ARTICLES AVEC DE L'AIR, SYSTÈME DE RÉCUPÉRATION D'ÉNERGIE ET SYSTÈME DE SÉCHAGE

(30) Priority: 04.04.2014 SE 1450418
(43) Date of publication of application: 08.02.2017
(73) Proprietor: Valutec AB, 931 27 Skellefteå (SE)
(72) Inventor: LARSSON, Robert, S-93146 Skellefteå (SE)
(74) Representative: Zacco Sweden AB
(86) International application number: PCT/SE2015/050375
(87) International publication number: WO 2015/152799

(56) References cited:
- FR-A1- 2 311 261
- NL-A- 8 402 014
- SE-A1- 1 050 619
- US-A- 2 249 624
- US-A- 4 255 870
- US-A- 4 312 136
- US-A- 4 312 136
- US-A- 5 659 975
- US-A1- 2004 187 341
- US-A1- 2011 067 262
- US-B1- 7 089 683
- ANDERSSON, J-O.: 'Energieffektivisering av virkestorkning för sagverksindustrin' LULEå UNIVERSITY OF TECHNOLOGY, THE INSTITUTION OF APPLIED PHYSICS, MACHINE AND MATERIAL TECHNOLOGY, DIVISION OF OF ENERGY 2009, pages 28 - 29, XP055228568

## Description

### TECHNICAL AREA

This invention concerns a method for drying items by air that is caused to circulate around and/or through the material, where the drying process comprises at least two subprocesses and where the circulation air in each subprocess is conditioned to considerably different wet temperatures.

This invention concerns also an energy-recovery system intended to be used during the drying of items by air that is caused to circulate around and/or through the material, where the drying process comprises at least two subprocesses and where the circulation air in each subprocess is conditioned to considerably different wet temperatures.

The invention concerns also a drying arrangement comprising such an energy-recovery system.

### BACKGROUND

Closest known technic is known from US 2004/187341 showing and describing a multichamber timber drying kiln in which different conditions are maintained in each chamber and methods of drying timber using such a kiln. In one aspect timber is rapidly heated within a first chamber and then transferred to a further chamber for further drying.

Other know technic is known from US 4 312 136 showing and describing wet plasterboard to be dried is advanced along a path. At an upstream portion of the path, air is heated and directed towards the plasterboard for initial drying of the latter.

Normally when material is to be dried, air is used as a heat-transfer and moisture-transfer and drying medium. Air with a specific temperature, moisture content and rate of flow is circulated through the material with the aid of fans. This air, the drying air, is heated with the aid of an air-heating arrangement that comprises heating coils. The drying air is caused to pass through the material such that moisture and water evaporate from the material and are absorbed by the drying air. In order for the drying air that is circulated in the drying chamber, which air eventually becomes saturated with moisture, to be able to absorb more water from the material, it must be dehumidified, which normally takes place through ventilation, whereby the air is diluted with cold, relatively dry outdoor air known as "fresh air".

A drying arrangement is normally used during the drying of material. A drying arrangement may be of the chamber dryer type or it may be a continuous dryer, a progressive tunnel dryer. The drying in a chamber dryer takes place in batches in closed chambers. The dryer is filled with timber and the drying subsequently continues until the material is fully dry. In progressive dryers, also known as progressive tunnel dryers, the material is fed forwards stepwise through the dryer. The drying climate varies in zones along the drying channel. The drying climate is varied all the time and the drying process is adapted according to the material in the dryer, the desired final moisture content and the desired final quality. The climate in the drying chamber is controlled through the regulation of pre-determined parameters such as, among other things, dry and wet temperatures. The dry temperature is controlled with the aid of regulation of the heat emitted from a heating coil, while the wet temperature is controlled through regulation of the degree of opening of ventilation openings, and possibly also watering or steam-treatment equipment. The difference in temperature between a dry thermometer and a wet thermometer reflects the relative air humidity, whereby a relatively small difference in temperature corresponds to a relatively high air humidity. In order for the material to dry, it is necessary that the water that is bound in and around the material is transported out of the material. The rate of this process depends primarily on the temperature and the prevalent psychrometric difference, i.e. the difference between the dry and wet temperatures, the moisture content of the material and the rate of flow of the air.

It is known that the energy consumption of a dryer facility during drying can be reduced by dividing the dryer facility into a number of zones and by recovering as far as is possible the heat content from one zone to another zone that at that moment has a larger requirement for heat.

A heat exchanger is normally used, in which the ventilation is carried out in such a manner that exhaust air (with a higher temperature) that is output from one zone is allowed to transfer part of its energy to supply air (with a lower temperature) that is input to another zone.

All control operations, displacements and the heating and cooling of air require energy. Energy will always have a cost and has, when considered in a historical perspective, become more expensive with time. Relatively high energy costs, therefore, are to be expected also in the future, and the requirement for the drying of material with reduced energy consumption, and drying processes associated with this that have a low energy consumption will, therefore, strongly increase.

### SUMMARY OF THE INVENTION

One purpose of the present invention is to make possible reduced energy consumption during a method for the drying of material with air. The invention concerns also an energy-recovery system that makes possible reduced energy consumption, and a drying arrangement with this reduced energy consumption.

The invention concerns a method that comprises the technical features that are specified in claim 1, an energy-recovery system that comprises the technical features that are specified in claim 5, and a drying arrangement that comprises the technical features that are specified in claim 10.

### DESCRIPTION OF DRAWINGS

**Figure 1** shows parts of an energy-recovery system according to the invention.
**Figure 2** shows a drying arrangement according to the invention comprising a continuous dryer.
**Figure 3** shows a drying arrangement according to the invention comprising a chamber dryer.
**Figure 4** shows a drying arrangement according to the invention comprising two chamber dryers.

### DESCRIPTION OF EMBODIMENTS

This invention concerns a method for the drying of material 1 by air that is caused to circulate around and/or through the material 1, where the drying comprises at least two subprocesses A and B and where the circulation air in each subprocess A and B is conditioned to considerably different wet temperatures TvA and TvB.

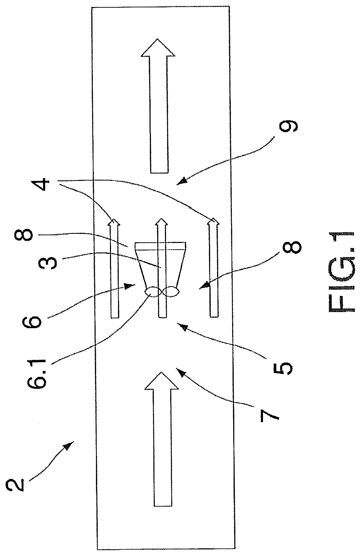

The recovery of energy is to take place, see Figure 1, during the method during the drying of the material 1. The circulation air in one of the subprocesses A or B, the one with higher wet temperature TvA or TvB, is divided up into at least two subsets 3 and 4. A first subset 3 is demoisturised through condensation and where energy obtained during the condensation process is transferred to the second subprocess A or B, to the circulation air with the lower wet temperature TvA or TvB, and where the other subset 4 of the circulation air is led past the condensation process.

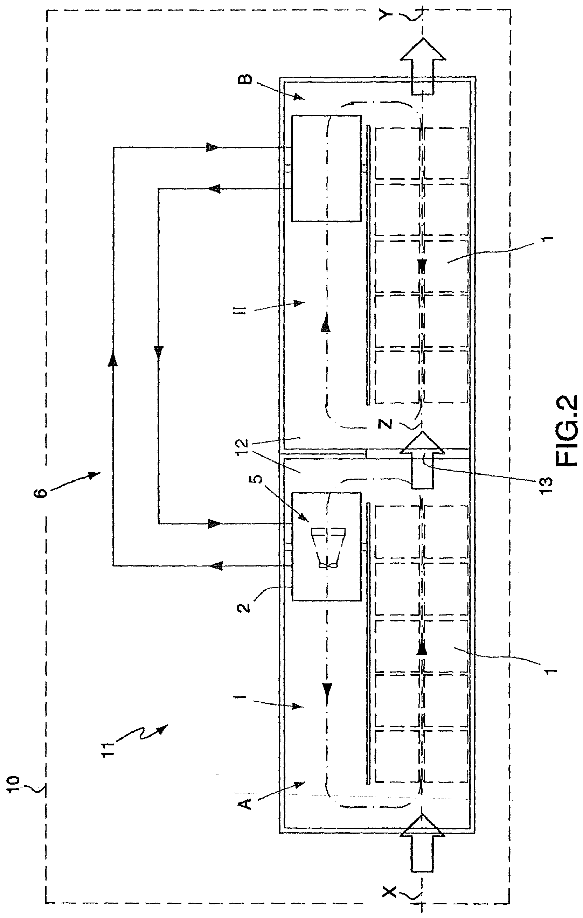

An energy-recovery system 2, see Figure 2, is used during the energy-recovery process, and the circulation air in one of the subprocesses A or B, the one with higher wet temperature TvA or TvB, is divided up into at least two subsets 3 and 4. A first subset 3 is caused to pass through a condensation arrangement 5 where the first subset 3 is demoisturised through condensation and where energy obtained during the condensation process is transferred to an energy arrangement 6 for transfer of the energy to the second subprocess A or B, to the circulation air with the lower wet temperature TvA or TvB, and where the other subset 4 of the circulation air is led past the condensation arrangement 5.

Since it is a subset 3 of the flow of air that is to pass the condensation arrangement 5, a significantly smaller and simpler condensation arrangement 5 is required, and less energy is in this way consumed. Furthermore, the specific heating requirement will be lower than it is with traditional ventilation, since there is no supply flow of air that in itself requires heating. A further advantage is that the cost of the energy-recovery system can be kept low, since a smaller condensation arrangement can be used.

All subsets 3 and 4 of the circulation air are brought together after the passage of the first subset through the condensation arrangement 5.

The fall in pressure in the first subset 3 that passes through the condensation arrangement 5 is compensated for through a fan 6.1 being used. The power of the condensation arrangement is regulated through monitoring and adjustment of the rate of revolution of the fan. Since the condensation arrangement is smaller than usual since solely a subset 3 of the circulation air is to be condensed, also a smaller fan can be used that requires less energy and is in this way cheaper, with respect to both purchasing and operation.

The method according to the invention has been developed for the drying of material where the material is timber. The drying of timber is influenced not solely by the fact that the timber is to become dry. The growth of mould and the formation of cracks are normally to be avoided, but these may be also desired in order for the timber to obtain certain properties and effects. The drying influences also the properties of the wood in the dry state, and it influences the colour of the dried wood.

The invention concerns also an energy-recovery system 2, see Figure 1, intended to be used during the drying of material 1 by air that is caused to circulate around and/or through the material 1, where the drying comprises at least two subprocesses A and B and where the circulation air in each subprocess A and B is conditioned to considerably different wet temperatures TvA and TvB.

The circulation air in one of the subprocesses A or B, the one with higher wet temperature TvA or TvB, is passed into the energy-recovery system 2 and is there divided into at least two subsets 3 and 4.

The energy-recovery system 2 comprises a condensation arrangement 5 through which a first subset 3 of the circulation air is caused to pass a condensation arrangement 5.

The energy-recovery system 2 comprises a first compartment 7 in which the circulation air is divided into subsets 3 and 4.

One 3 of the subsets is caused to pass through the condensation arrangement 5 in order to be demoisturised and to transfer the energy obtained during the condensation process to an energy arrangement 6 that is comprised within the energy-recovery system 2 for the transfer of the energy to the second subprocess A or B, to the circulation air with the lower wet temperature TvA or TvB.

The energy-recovery system 2 comprises also a passage 8 in which the other subset 4 of the circulation air is led past the condensation arrangement 5.

The energy-recovery system 2 comprises a compartment 9 in which all subsets 3 and 4 of the circulation air are brought together after the passage of the first subset through the condensation arrangement.

The energy arrangement 6 comprises a fluid medium, not shown in the drawings, that absorbs the energy that is released during the condensation process and that is caused to circulate between the two subprocesses A and B and that makes possible the transport of energy from one subprocess A or B to the second subprocess A or B.

The energy-recovery system 2 comprises a fan 6.1 that compensates for the fall in pressure in the first subset 3 of the circulation air that passes through the condensation arrangement 5. The rate of revolution of the fan 6.1 can be varied in order to regulate the power of the condensation arrangement.

The energy-recovery system 2 according to the invention has been developed for the drying of material where the material is timber. The drying of timber is influenced not solely by the fact that the timber is to become dry. The drying influences also the properties of the wood in the dry state, and it influences the colour of the dried wood.

The invention concerns a drying arrangement 10 for the drying of material by air that is caused to circulate around and/or through the material, where the drying comprises at least two subprocesses A and B and where the circulation air in each subprocess A and B is conditioned to considerably different wet temperatures TvA and TvB. The drying arrangement 10 comprises at least one energy-recovery system 2 of the type that has been described here in the text above.

The design and function of the energy-recovery system make it possible to comprise the energy-recovery system 2 into the drying arrangement 10. The energy-recovery system 2 is integrated into the drying arrangement 10. Energy recovery has previously taken place in a unit that is external, relative to existing drying arrangements, which is usually both large and expensive. A clear disadvantage of external units is also the noise that arises when exhaust air fans must be used. Due to the internal location of the energy-recovery system 2 in the drying arrangement 19 and to the fact that the condensation process concerns only a subset of the circulation, the size requirement of the energy-recovery system 2 is reduced, which will be cost-effective both at purchase and during operation.

This drying arrangement 10 gives an approximately 10% lower specific consumption of heat (kJ/kg H₂O) than a corresponding prior art arrangement, in which the energy-recovery system 2, the condensation arrangement 5, is to be passed by the complete flow of air in the previously known manner. The reduction in energy consumption arises due to the fact that, with a smaller flow of air, a larger fraction of the heat comes from condensation, while only a minor part comes from cooling of the dry flow of air. The latter component does not correspond to any evaporation from the drying material: it represents solely heat that has come from a heating coil.

The two subprocesses A and B are arranged in series with, in parallel with, or independently of, each other.

A drying arrangement 10 according to the invention comprises a continuous dryer 11, a continuous progressive tunnel dryer, see Figure 2, that in turn comprises at least one energy-recovery system 2 and one outwardly closed drying tunnel 12, chamber, through which material 1 is fed. The material 1 is normally divided into batches such that when material, one batch, is arranged in the drying tunnel 12, as shown by the arrow X in Figure 2, material, another batch, whose drying process has been completed, is fed out from the drying tunnel 12, as shown by the arrow Y in Figure. 2. The material 1 is covered and permeated in the drying tunnel 13 by drying air that is circulating in the drying tunnel. The drying tunnel 12 comprises a door 13 that can be opened by which the drying tunnel 12, when the door 13 is closed, is divided into a first and a second drying zone I and II, whereby the material is allowed to pass from the first I to the second II drying zone when the door 13 is in its open condition, as shown by the arrow Z in Figure 2. Each drying zone I and II comprises equipment, not shown in the drawings since it is of previously known type, that makes it possible to control and regulate the drying climate in each drying zone I and II in a such manner that each drying zone I and II forms a first and a second subprocess A and B, respectively, and where the control and regulatory equipment is arranged to provide the circulation air in one subprocess A or B with a higher wet temperature TvA or TvB than the wet temperature TvA or TvB of the circulation air in the second subprocess A or B.

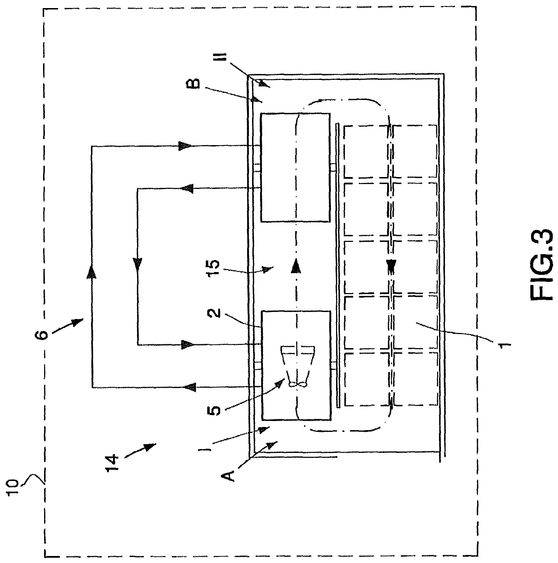

A drying arrangement 10 according to the invention may comprise, as an alternative, a chamber dryer 14, see Figure 3, that in turn comprises at least one energy-recovery system 2 and an outwardly closed drying compartment 15 in which moist material 1 is placed and covered and permeated by drying air that is circulating in the drying compartment 15 and where the drying compartment 15 is divided into at least a first and a second drying zone I and II, to each of which is allocated equipment, not shown in the drawings since it is of previously known type, that makes it possible to control and regulate the drying climate in such a manner that each drying zone I and II forms a first and a second subprocess A and B, respectively, and which control and regulatory equipment is arranged to provide the circulation air in one subprocess A or B with a higher wet temperature TvA or TvB than the wet temperature TvA or TvB of the circulation air in the second subprocess (B).

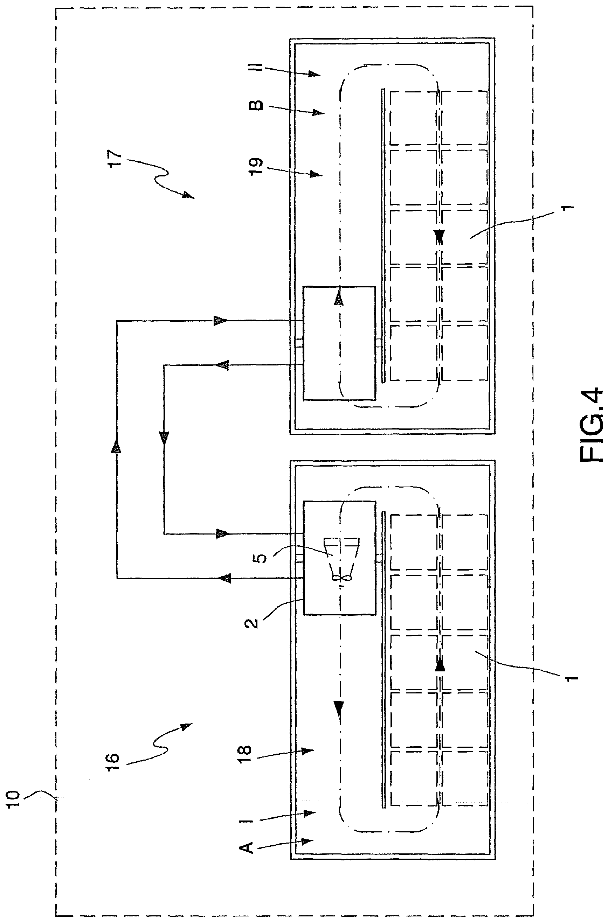

A drying arrangement 10 according to the invention may comprise also at least two chamber dryers 16 and 17, see Figure 4, where at least one of these comprises at least one energy-recovery system 2 and where the chamber dryers 16 and 17 each comprises an outwardly closed drying compartment 18 and 19 in which moist material 1 is placed and covered and permeated by drying air that is circulating in the drying compartments and where a chamber dryer 16 or 17, with its drying compartment 18 or 19, constitutes a drying zone I or II and where the second chamber dryer 16 or 17, with its drying compartment 18 or 19, constitutes a second drying zone I or II, each of which has been allocated equipment, not shown in the drawings since it is of previously known type, that makes it possible to control and regulate the drying climate in such a manner that each drying zone I and II forms a first and a second subprocess A and B, respectively, and which control and regulatory equipment is arranged to provide the circulation air in one subprocess A or B with a higher wet temperature TvA or TvB than the wet temperature TvA or TvB of the circulation air in the second subprocess A or B.

In a continuous dryer 11 it is the normally the first drying zone I, the first subprocess A, the zone into which the material first enters, a preheating zone, that has the highest wet temperature TvA, and it is from the first drying zone I, the first subprocess A, that energy, heat, is transferred to the second drying zone II, a main drying zone, the second subprocess B.

The condensation arrangement 5 of the energy-recovery system is located inside at least one of the drying zones I or II, one of the subprocesses A or B.

The energy recovery system 2 is drawn in the drawings at specified locations. This location, however, is not of any principal significance, and can be varied within the innovative concept.

A drying arrangement 10 according to the invention has been developed for the drying of material 1 where the material 1 is timber. The drying of timber is influenced not solely by the fact that the timber is to become dry. The growth of mould is normally to be avoided, but it may also be desired for certain properties and effects. The drying influences also the properties of the wood in the dry state, and it influences the colour of the dried wood.

## Claims

1. A method for the drying of material (1) by air that is caused to circulate around and/or through the material (1), where the drying comprises at least two subprocesses (A, B) and where the circulation air in each subprocess (A, B) is conditioned to considerably different wet temperatures (TvA, TvB)
**characterised in**
**that** energy recovery takes place during drying through
the use of an energy-recovery system (2), where the circulation air in one of the subprocesses (A, B), the subprocess with higher wet temperature (TvA, TvB), is divided into at least two subsets (3, 4) in a first compartment (7),
where, for compensating for the fall in pressure in the first subset (3) that passes through a condensation arrangement (5), a fan (6.1) comprised in the energy-recovery system (2) is used
where a subset (3) is caused to pass through the condensation arrangement (5) in which the subset (3) is demoisturised through condensation,
where energy obtained during the condensation process is transferred to an energy arrangement (6) for the transfer of the energy to the second subprocess (A, B), to circulation air with the lower wet temperature (TvA, TvB),
where the other subset (4) of the circulation air is led past the condensation process, the condensation arrangement (5),
where all subsets (3, 4) of the circulation air are brought together after the condensation process of the first subset, its passage through the condensation arrangement (5), in a second compartment (9) and
where the fan (6.1) has a rate of revolution that can be varied in order to regulate the power of the condensation arrangement (5).

2. The method according to claim 1, where the fall in pressure in the first subset that passes through the condensation arrangement (5) is compensated for through a fan (6.1) being used.

3. The method according to claim 2, where the power of the condensation arrangement is regulated through monitoring and adjustment of the rate of revolution of the fan.

4. The method according to any one of claims 1-3, where the material (1) is timber.

5. An energy-recovery system (2) intended to be used during the drying of material (1) by air that is caused to circulate around and/or through the material (1), where the drying comprises at least two subprocesses (A, B) and where the circulation air in each subprocess (A, B) is conditioned to considerably different wet temperatures (TvA, TvB)
**characterised by**
a condensation arrangement (5) through which a subset (3) of the circulation air in one of the subprocesses (A, B), the subprocess with higher wet temperature (TvA, TvB), is caused to pass in order to be demoisturised and to transfer the energy obtained during the condensation process to an energy arrangement (6) that is comprised within the energy-recovery system (2) for the transfer of the energy to the second subprocess (A, B), to the circulation air with the lower wet temperature (TvA, TvB),
a first compartment (7) in which the division of the circulation air into at least two subsets (3, 4) takes place,
a passage (8) in which the other subset (4) of the circulation air is led past the condensation arrangement (5),
a second compartment (9) in which the subsets (3, 4) of the circulation air are brought together after the passage of one of the subsets through the condensation arrangement (5)
and a fan (6.1) that compensates for the fall in pressure in the first subset (3) that passes through the condensation arrangement (5) and having a rate of revolution that can be varied in order to regulate the power of the condensation arrangement.

6. The energy-recovery system (2) according to claim 5, where the energy arrangement (6) comprises a fluid medium that absorbs the energy that is released during the condensation process and that is caused to circulate between the two subprocess (A, B) and that makes possible the transport of energy from one subprocess (A, B) to the second subprocess (A, B).

7. The energy-recovery system (2) according to any one of claims 5 and 6, where the material (1) is timber.

8. A drying arrangement (10) for the drying of material (1) by air that is caused to circulate around and/or through the material, where the drying comprises at least two subprocesses (A, B) and where the circulation air in each subprocess (A, B) is conditioned to considerably different wet temperatures (TvA, TvB) comprising at least one energy-recovery system (2) according to any one of claims 5-7.

9. The drying arrangement (10) according to claim 8, where the two subprocesses (A, B) are arranged in series with, in parallel with, or independently of, each other.

10. The drying arrangement (10) according to claim 9, comprising a continuous dryer (11) comprising at least one energy-recovery system (2) and a tunnel (12) that is outwardly closed through which the material (1) is fed into the tunnel at the same time as a batch with material whose drying process has been completed is fed out from the tunnel, in which the material is covered and permeated by drying air circulating in the tunnel (12), where the continuous dryer (11) comprises a door (13) that can be opened and with which the tunnel (12), when the door (13) is closed, is divided into a first and a second drying zone (I, II) whereby the material (1) is allowed to pass, when the door (13) is in its open condition, from the first to the second drying zone (I, II), that each drying zone (I, II) comprises equipment that makes it possible to control and regulate the drying climate in such a manner that each drying zone (I, II) forms a first and a second subprocess (A, B), respectively, and where a control and regulatory equipment is arranged to provide the circulation air in one of the subprocesses (A, B) with a wet temperature (TvA, TvB) that differs from the wet temperature (TvA, TvB) of the circulation air in the second subprocess (A, B).

11. The drying arrangement (10) according to claim 8, comprising a chamber dryer (14) comprising at least one energy-recovery system (2) and a drying compartment (15) that is outwardly closed, in which moist material (1) is placed and covered and permeated by drying air that is circulating in the drying tunnel and where the drying compartment (15) is divided into at least a first and a second drying zone (I, II), to each of which is allocated equipment that makes it possible to control and regulate the drying climate in such a manner that each drying zone (I, II) forms a first and a second subprocess (A, B), respectively, and which control and regulatory equipment is arranged to provide the circulation air in one of the subprocesses (A, B) with a wet temperature (TvA, TvB) that differs from the wet temperature (TvA, TvB) of the circulation air in the second subprocess (A, B).

12. The drying arrangement (10) according to claim 8, comprising at least two chamber dryers (16, 17) where at least one of these comprises at least one energy-recovery system (2) and where each of the chamber dryers (16, 17) comprises a drying compartment (18, 19) that is outwardly closed in which moist material (1) is placed and covered and permeated by drying air that is circulating in the drying tunnel and where one of the chamber dryers (16, 17), with its drying compartment (18, 19), constitutes a drying zone (I, II) and where the second chamber dryer (16, 17), with its drying compartment (18, 19), constitutes a second drying zone (I, II), each of which has been assigned equipment that makes it possible to control and regulate the drying climate in such a manner that each drying zone (I, II) forms a first and a second subprocess (A, B), respectively, and which control and regulatory equipment is arranged to provide the circulation air in one of the subprocesses (A, B) with a wet temperature (TvA, TvB) that differs from the wet temperature (TvA, TvB) of the circulation air in the second subprocess (A, B).

13. The drying arrangement (10) according to any one of claims 12-14, where the condensation arrangement (5) of the energy-recovery system is located inside at least one of the drying zones (I, II), the subprocess (A, B).

14. The drying arrangement (10) according to any one of claims 10-13, where the material (1) is timber.

## Patentansprüche

1. Verfahren zum Trocknen von Material (1) mittels Luft, die zum Zirkulieren um und/oder durch das Material (1) gebracht wird, wobei das Trocknen mindestens zwei Unterprozesse (A, B) umfasst, und wobei die Zirkulationsluft in jedem Unterprozess (A, B) auf deutlich verschiedene Nasstemperaturen (TvA, TvB) konditioniert wird,
**dadurch gekennzeichnet, dass**
eine Energierückgewinnung während des Trocknens durch die Verwendung eines Energierückgewinnungssystems (2) erfolgt, wobei die Zirkulationsluft in einem der Unterprozesse (A, B), demjenigen Unterprozess mit der höheren Nasstemperatur (TvA, TvB), in mindestens zwei Untermengen (3, 4) in einem ersten Raum (7) unterteilt wird,
wobei ein Gebläse (6.1) im Energierückgewinnungssystem (2) zum Ausgleichen des Druckabfalls in der ersten Untermenge (3), passierend durch eine Kondensationsvorrichtung (5), verwendet ist,
wobei eine Untermenge (3) zum Passieren durch die Kondensationsvorrichtung (5), worin die Untermenge (3) durch Kondensation entfeuchtet wird, gebracht wird
wobei die Energie, die während des Kondensationsprozesses gewonnen wird, zu einer Energievorrichtung (6) überführt wird zum Überführen der Energie zum zweiten Unterprozess (A, B), zur Zirkulationsluft mit der unteren Nasstemperatur (TvA, TvB),
wobei die andere Untermenge (4) der Zirkulationsluft dem Kondensationsprozess, der Kondensationsvorrichtung (5) vorbeigeführt wird,
wobei alle Untermengen (3, 4) der Zirkulationsluft nach dem Kondensationsprozess der ersten Untermenge, den Durchgang davon durch die Kondensationsvorrichtung (5), in einem zweiten Raum (9) zusammengebracht werden, und
wobei das Gebläse (6.1) eine Umlaufrate hat, die variiert werden kann, um die Leistung der Kondensationsvorrichtung (5) zu regeln.

2. Verfahren nach Anspruch 1, wobei der Druckabfall in der ersten Untermenge, passierend durch die Kondensationsvorrichtung (5), durch Verwendung eines Gebläses (6.1) ausgeglichen wird.

3. Verfahren nach Anspruch 2, wobei die Leistung der Kondensationsvorrichtung durch Überwachen und Einstellen der Umlaufrate des Gebläses geregelt wird.

4. Verfahren nach einem der Ansprüche 1-3, wobei das Material (1) Holz ist.

5. Energierückgewinnungssystem (2) zur Verwendung während des Trocknens von Material (1) mittels Luft, die zum Zirkulieren um und/oder durch das Material (1) gebracht wird, wobei das Trocknen mindestens zwei Unterprozesse (A, B) umfasst, und wobei die Zirkulationsluft in jedem Unterprozess (A, B) auf deutlich verschiedene Nasstemperaturen (TvA, TvB) konditioniert ist, **gekennzeichnet durch**
eine Kondensationsvorrichtung (5), durch welche eine Untermenge (3) der Zirkulationsluft in einem der Unterprozesse (A, B), demjenigen Unterprozess mit der höheren Nasstemperatur (TvA, TvB), zum Passieren gebracht wird, um entfeuchtet zu werden und um während des Kondensationsprozesses gewonnenen Energie zu einer Energievorrichtung (6) zu überführen, die im Energierückgewinnungssystem (2) enthalten ist zum Überführen der Energie zum zweiten Unterprozess (A, B), zur Zirkulationsluft mit dem unteren Nasstemperatur (TvA, TvB),
einen ersten Raum (7), worin die Aufteilung der Zirkulationsluft in mindestens zwei Untermengen (3, 4) erfolgt,
einen Durchgang (8), worin die andere Untermenge (4) der Zirkulationsluft der Kondensationsvorrichtung (5) vorbeigeführt wird,
einen zweiten Raum (9), worin die Untermengen (3, 4) der Zirkulationsluft nach dem Durchgang von einer der Untermengen durch die Kondensationsvorrichtung (5) zusammengebracht werden
und ein Gebläse (6.1), das den Druckabfall in der ersten Untermenge (3) ausgleicht, passierend durch die Kondensationsvorrichtung (5) und mit einer Umlaufrate, die variiert werden kann, um die Leistung der Kondensationsvorrichtung zu regeln.

6. Energierückgewinnungssystem (2) nach Anspruch 5, wobei die Energievorrichtung (6) ein Fluidmedium umfasst, das die Energie absorbiert, die während des Kondensationsprozesses freigegeben wird und zum Zirkulieren zwischen den zwei Unterprozessen (A, B) gebracht wird und den Transport von Energie von einem Unterprozess (A, B) zum zweiten Unterprozess (A, B) ermöglicht.

7. Energierückgewinnungssystem (2) nach einem der Ansprüche 5 und 6, wobei das Material (1) Holz ist.

8. Trockenvorrichtung (10) zum Trocknen von Material (1) mittels Luft, die zum Zirkulieren um und/oder durch das Material gebracht wird, wobei das Trocknen mindestens zwei Unterprozesse (A, B) umfasst, und wobei die Zirkulationsluft in jedem Unterprozess (A, B) auf deutlich verschiedene Nasstemperaturen (TvA, TvB) konditioniert ist, umfassend mindestens ein Energierückgewinnungssystem (2) nach einem der Ansprüche 5-7.

9. Trockenvorrichtung (10) nach Anspruch 8, wobei die zwei Unterprozesse (A, B) in Reihe, parallel zueinander oder unabhängig voneinander angeordnet sind.

10. Trockenvorrichtung (10) nach Anspruch 9, umfassend einen kontinuierlichen Trockner (11), umfassend mindestens ein Energierückgewinnungssystem (2) und einen nach außen geschlossenen Tunnel (12), wodurch das Material (1) in den Tunnel eingeführt wird gleichzeitig damit, dass eine Ladung mit Material, dessen Trockenprozess vollendet ist, aus dem Tunnel ausgeführt wird, worin das Material abgedeckt und von Trockenluft durchdrungen wird, die im Tunnel (12) zirkuliert, wobei der kontinuierliche Trockner (11) eine Tür (13) aufweist, die geöffnet werden kann und womit der Tunnel (12), wenn die Tür (13) geschlossen ist, in eine erste und eine zweite Trocknungszone (I, II) eingeteilt wird, wobei das Material (1), wenn die Tür (13) in ihrem offenen Zustand ist, von der ersten zur zweiten Trocknungszone (I, II) passieren kann, dass jede Trocknungszone (I, II) eine Einrichtung umfasst, die es ermöglicht, das Trocknungsklima so zu steuern und regeln, dass jede Trocknungszone (I, II) jeweils ein erstes und ein zweites Unterprozess (A, B) ausmacht, und wobei eine Steuer- und Regulatoreinrichtung dafür eingerichtet ist, die Zirkulationsluft in einem der Unterprozesse (A, B) bereitzustellen mit einer Nasstemperatur (TvA, TvB), die sich von der Nasstemperatur (TvA, TvB) der Zirkulationsluft im zweiten Unterprozess (A, B) unterscheidet.

11. Trockenvorrichtung (10) nach Anspruch 8, umfassend einen Kammertrockner (14), umfassend mindestens ein Energierückgewinnungssystem (2) und einen nach außen geschlossenen Trockenraum (15), wo feuchtes Material (1) angeordnet und abgedeckt wird und von Trockenluft durchdrungen wird, die im Trockentunnel zirkuliert, und wobei der Trockenraum (15) in mindestens eine erste und eine zweite Trocknungszone (I, II) eingeteilt ist, wo es zu jeder davon eine Einrichtung zugeordnet ist, die es ermöglicht, das Trocknungsklima so zu steuern und regeln, dass jede Trocknungszone (I, II) jeweils einen ersten und einen zweiten Unterprozess (A, B) ausmacht, und welche Steuer- und Regulatoreinrichtung dafür eingerichtet ist, die Zirkulationsluft in einem der Unterprozesse (A, B) bereitzustellen mit einer Nasstemperatur (TvA, TvB), die sich von der Nasstemperatur (TvA, TvB) der Zirkulationsluft im zweiten Unterprozess (A, B) unterscheidet.

12. Trockenvorrichtung (10) nach Anspruch 8, umfassend mindestens zwei Kammertrockner (16, 17), wobei mindestens einer davon mindestens ein Energierückgewinnungssystem (2) umfasst, und wobei jeder von den Kammertrocknern (16, 17) einen nach außen geschlossenen Trockenraum (18, 19) umfasst, wo feuchtes Material (1) angeordnet und abgedeckt wird und von Trockenluft durchdrungen wird, die im Trockentunnel zirkuliert, und wobei einer der Kammertrockner (16, 17), mit seinem Trockenraum (18, 19), eine Trocknungszone (I, II) ausmacht, und wobei der zweite Kammertrockner (16, 17), mit seinem Trockenraum (18, 19), eine zweite Trocknungszone (I, II) ausmacht, wo es zu jeder davon eine Einrichtung zugeordnet ist, die es ermöglicht, das Trocknungsklima so zu steuern und regeln, dass jede Trocknungszone (I, II) jeweils einen ersten und einen zweiten Unterprozess (A, B) ausmacht, und welche Steuer- und Regulatoreinrichtung dafür eingerichtet ist, die Zirkulationsluft in einem der Unterprozesse (A, B) bereitzustellen mit einer Nasstemperatur (TvA, TvB), die sich von der Nasstemperatur (TvA, TvB) der Zirkulationsluft im zweiten Unterprozess (A, B) unterscheidet.

13. Trockenvorrichtung (10) nach einem der Ansprüche 12-14, wobei die Kondensationsvorrichtung (5) des Energierückgewinnungssystems innerhalb mindestens einer der Trocknungszonen (I, II), des Unterprozesses (A, B), angeordnet ist.

14. Trockenvorrichtung (10) nach einem der Ansprüche 10-13, wobei das Material (1) Holz ist.

## Revendications

1. Procédé de séchage de matériau (1) par de l'air qui est amené à circuler autour et / ou à travers le matériau (1), dans lequel le séchage comprend au moins deux sous-processus (A, B), et dans lequel l'air de circulation dans chaque sous-processus (A, B) est soumis à des températures humides très différentes (TvA, TvB)
**caractérisé en ce que**
la récupération d'énergie a lieu pendant le séchage
grâce à l'utilisation d'un système de récupération d'énergie (2), dans lequel la circulation de l'air dans l'un des sous-processus (A, B), le sous-processus avec la température humide la plus élevée (TvA, TvB), est divisé en au moins deux sous-ensembles (3, 4) dans un premier compartiment (7), où, pour compenser la chute de pression dans le premier sous-ensemble (3) qui passe à travers un un dispositif de condensation (5), un ventilateur (6.1) compris dans le système de récupération d'énergie (2) est utilisée,
où un sous-ensemble (3) est amené à passer à travers le dispositif de condensation (5) dans lequel le sous-ensemble (3) est déshumidifié par condensation, où l'énergie obtenue pendant le processus de condensation est transférée à un dispositif d'énergie (6) pour le transfert de l'énergie au deuxième sous-processus (A, B), à l'air de circulation avec la température humide la plus basse (TvA, TvB),
où l'autre sous-ensemble (4) de l'air de circulation est conduit après le processus de condensation, le dispositif de condensation (5),
où tous les sous-ensembles (3, 4) de l'air de circulation sont réunis après le processus de condensation du premier sous-ensemble, son passage à travers le dispositif de condensation (5), dans un deuxième compartiment (9) et
où le ventilateur (6.1) présente une vitesse de rotation qui peut être variée afin de régler la puissance du dispositif de condensation (5).

2. Procédé selon la revendication 1, dans lequel la chute de pression dans le premier sous-ensemble qui passe à travers le dispositif de condensation (5) est compensée par le biais d'un ventilateur (6.1) étant utilisé.

3. Procédé selon la revendication 2, dans lequel la puissance du dispositif de condensation est réglée par la surveillance et le réglage de la vitesse de rotation du ventilateur.

4. Procédé selon l'une quelconque des revendications 1 à 3, dans lequel le matériau (1) est du bois.

5. Système de récupération d'énergie (2) destiné à être utilisé pendant le séchage de matériau (1) par de l'air qui est amené à circuler autour et / ou à travers le matériau (1), dans lequel le séchage comprend au moins deux sous-processus (A, B), et dans lequel l'air de circulation dans chaque sous-processus (A, B) est soumis à des températures humides très différentes (TvA, TvB) **caractérisé par**
un dispositif de condensation (5) à travers lequel un sous-ensemble (3) de l'air de circulation dans l'un des sous-processus (A, B), le sous-processus avec la température humide la plus élevée (TvA, TvB), est amené à passer afin d'être déshumidifié et à transférer l'énergie obtenue au cours du processus de condensation à un dispositif énergétique (6) compris dans le système de récupération d'énergie (2) pour le transfert de l'énergie au deuxième sous-processus (A, B), à l'air de circulation à la température humide la plus basse (TvA, TvB), un premier compartiment (7) dans lequel la division de l'air de circulation en au moins deux sous-ensembles (3, 4) a lieu,
un passage (8) dans lequel l'autre sous-ensemble (4) de l'air de circulation est conduit après le dispositif de condensation (5),
un deuxième compartiment (9) dans lequel les sous-ensembles (3, 4) de l'air de circulation sont réunis après le passage de l'un des sous-ensembles à travers le dispositif de condensation (5)
et un ventilateur (6.1) qui compense la chute de pression dans le premier sous-ensemble (3) qui passe à travers le dispositif de condensation (5) et présente une vitesse de rotation qui peut être modifiée afin de régler la puissance du dispositif de condensation.

6. Système de récupération d'énergie (2) selon la revendication 5, dans lequel le dispositif d'énergie (6) comprend un milieu fluide qui absorbe l'énergie qui est libérée pendant le processus de condensation et qui est amené à circuler entre les deux sous-processus (A, B) et qui permet le transport d'énergie d'un sous-processus (A, B) au deuxième sous-processus (A, B).

7. Système de récupération d'énergie (2) selon l'une quelconque des revendications 5 et 6, dans lequel le matériau (1) est du bois.

8. Dispositif de séchage (10) pour le séchage de matériau (1) par de l'air qui est amené à circuler autour et / ou à travers le matériau (1), dans lequel le séchage comprend au moins deux sous-processus (A, B), et dans lequel l'air de circulation dans chaque sous-processus (A, B) est conditionné à des températures humides très différentes (TvA, TvB) comprenant au moins un système de récupération d'énergie (2) selon l'une quelconque des revendications 5 à 7.

9. Dispositif de séchage (10) selon la revendication 8, dans lequel les deux sous-processus (A, B) sont disposés en série, en parallèle ou indépendamment l'un de l'autre.

10. Dispositif de séchage (10) selon la revendication 9, comprenant un sécheur continu (11) comprenant au moins un système de récupération d'énergie (2) et un tunnel (12) qui est fermé vers l'extérieur et à travers lequel le matériau (1) est introduit dans le tunnel en même temps qu'un lot avec le matériau dont le processus de séchage est terminé sort du tunnel, dans lequel le matériau est recouvert et imprégné par l'air de séchage circulant dans le tunnel (12), où le séchoir en continu (11) comprend une porte (13) pouvant être ouverte et par laquelle le tunnel (12), lorsque la porte (13) est fermée, est divisé en une première et une deuxième zone de séchage (I, II), le matériau (1) pouvant passer, lorsque la porte (13) est dans son état ouvert, de la première à la deuxième zone de séchage (I, II), chaque zone de séchage (I, II) comprenant un équipement permettant de contrôler et de régler le climat de séchage de telle sorte que chaque zone de séchage (I, II) forme respectivement un premier et un deuxième sous-processus (A, B), et un équipement de contrôle et de réglage étant conçu pour fournir à l'air de circulation dans l'un des sous-processus (A, B) une température humide (TvA, TvB) différente de la température humide (TvA, TvB) de l'air de circulation dans le deuxième sous-processus (A, B).

11. Dispositif de séchage (10) selon la revendication 8, comprenant un séchoir à chambre (14) comprenant au moins un système de récupération d'énergie (2) et un compartiment de séchage (15) fermé vers l'extérieur, dans lequel un matériau humide (1) est placé et couvert et imprégné par de l'air de séchage circulant dans le tunnel de séchage et dans lequel le compartiment de séchage (15) est divisé en au moins une première et une deuxième zone de séchage (I, II), à chacune desquelles est affecté un équipement qui permet de commander et de régler le climat de séchage de telle sorte que chaque zone de séchage (I, II) forme respectivement un premier et un deuxième sous-processus (A, B), et ledit équipement de contrôle et de réglage étant conçu pour fournir à l'air de circulation dans l'un des sous-processus (A, B) une température humide (TvA, TvB) différente de la température humide (TvA, TvB) de l'air de circulation dans le deuxième sous-processus (A, B).

12. Dispositif de séchage (10) selon la revendication 8, comprenant au moins deux séchoirs à chambre (16, 17) dont l'au moins un comprend au moins un système de récupération d'énergie (2) et où chacun des séchoirs à chambre (16, 17) comprend un compartiment de séchage (18, 19) fermé vers l'extérieur dans lequel un matériau humide (1) est placé, recouvert et imprégné par de l'air de séchage circulant dans le tunnel de séchage, et dans lequel l'un des séchoirs à chambre (16, 17), avec son compartiment de séchage (18, 19), constitue une zone de séchage (I, II) et dans lequel le deuxième séchoir à chambre (16, 17), avec son compartiment de séchage (18, 19), constitue une deuxième zone de séchage, à chacune desquelles est affecté à des équipements permettant de commander et de régler le climat de séchage de telle sorte que chaque zone de séchage (I, II) forme respectivement un premier et un deuxième sous-processus (A, B), et ledit équipement de contrôle et de réglage étant agencé pour fournir à l'air de circulation dans l'un des sous-processus (A, B) une température humide (TvA, TvB) différente de la température humide (TvA, TvB) de l'air de circulation dans le deuxième sous-processus (A, B).

13. Dispositif de séchage (10) selon l'une quelconque des revendications 12 à 14, dans lequel le dispositif de condensation (5) du système de récupération d'énergie est situé à l'intérieur d'au moins l'une des zones de séchage (I, II), le sous-processus (A, B).

14. Dispositif de séchage (10) selon l'une quelconque des revendications 10 à 13, dans lequel le matériau (1) est du bois.
